# EUROPÄISCHE PATENTSCHRIFT

(11) **EP 0 813 468 B1**
(45) Veröffentlichungstag und Bekanntmachung des Hinweises auf die Patenterteilung: **21.10.1998**
(21) Anmeldenummer: 96902896.8
(22) Anmeldetag: 24.02.1996
(51) Int. Cl.: B29B 7/76, B01F 5/02

(54) **VORRICHTUNG ZUM MISCHEN MISCHFÄHIGER KOMPONENTEN**
DEVICE FOR MIXING MISCIBLE COMPONENTS
DISPOSITIF DE MELANGE DE COMPOSANTS MISCIBLES

(30) Priorität: 07.03.1995 DE 19507910; 13.01.1996 DE 19601075
(43) Veröffentlichungstag der Anmeldung: 29.12.1997
(73) Patentinhaber: Tröster, Günther, 96149 Breitengüssbach (DE)
(72) Erfinder: SCHÜTZE, Thomas, D-42857 Remscheid (DE)
(74) Vertreter: Füssel, Michael
(86) Internationale Anmeldenummer: DE9600311
(87) Internationale Veröffentlichungsnummer: WO9627484

(56) Entgegenhaltungen:
- FR-A- 2 095 391

## Beschreibung

Die Erfindung betrifft eine Vorrichtung zum Mischen mischfähiger Komponenten mit einem Schieber, der einen kopfseitig aus dem Schieber austretenden und ins Freie mündenden Mischkanal aufweist, wobei der Schieber in einem Gehäuse zwischen einer Mischposition, in der der Mischkanal mit Komponentenzuleitungen verbunden ist, und einer Sperrposition, in der der Mischkanal gegenüber den Komponentenzuleitungen verschlossen ist, hin- und her verschiebbar ist.

Eine derartige Vorrichtung ist bekannt aus der DE-A-25 15 579, der DE-A-20 65 057, oder der DE-A-43 17 086.

Bei der aus der DE-A-25 15 579 oder der DE-A-20 65 057 bekannten Vorrichtung besteht das Problem der Reinigung infolge vercrackender Komponenten. Die Reinigung erfolgt durch zusätzlichen Reinigungskolben.

Derartige Reinigungskolben sind jedoch konstruktiv aufwendig, da sie nicht nur exakt linear geführt werden müssen, sondern darüber hinaus auch mit dem ein- und ausfahrenden Schieber mitzubewegen sind.

Darüber hinaus müssen diese Reinigungskolben in allerengsten Toleranzen geführt sein, um ein Festsetzen von vercrackter Mischungskomponente im Sitzspalt zwischen Reinigungskolben und Schieber zu verhindern.

Es hat sich gezeigt, daß der Reinigung derartiger Schieber insbesondere bei geringen Fördermengen große Bedeutung zukommt, weil aufgrund der geringen Förderdurchsätze bei hohen Temperaturen die Gefahr der Vercrackung hoch ist.

Hierzu ist aus der DE-A-43 17 086 bekannt, einen Schieber mit Mischkammern und Kanälen vorzusehen, die außenseitig des dort vorgeschlagenen Schiebers von den Dichtflächen des Gehäuses abgedichtet werden müssen.

Dies verlangt nicht nur nach einer hohen Dichtigkeit zwischen den Außenwänden des Flachschiebers und den zugeordneten Gehäuseschlitzwänden, sondern darüber hinaus auch die erforderliche Leichtgängigkeit.

Bei dieser Konstruktion treten folglich sich widersprechende Anforderungen auf, so daß diese Lösung stets ein Kompromiß bleiben wird.

Zwar hat diese Lösung den Vorteil, daß Kanäle in einer Ruheposition so frei liegen, daß sie mittels lösemittelhaltiger Preßluft gereinigt werden können.

Die Nachteile der sich widersprechenden Anforderungen, nämlich Leichtgängigkeit des Schiebers im Gehäuse zur Verminderung von jeglichem Verschleiß bei gleichzeitig hoher Dichtkraft zwischen den Führungsflächen des Schiebers und des Gehäuses überwiegen jedoch.

Bei den hier zu betrachtenden insbesondere geringen Schiebergeschwindigkeiten besteht deshalb auch bei dieser Dosiervorrichtung die Gefahr des Verklebens des Flachschiebers mit den Dichtflächen im Gehäuse.

Es wird zwar vorgeschlagen, bei dieser Vorrichtung durch elastische Abstützung von Dichtflächen zwischen Gehäuse und Schieber das Passungsspiel zu eliminieren, und somit das Verkleben zwischen Schieber und Gehäuse zu verhindern. Dies kann jedoch nur eine theoretische Betrachtung sein, da, wie oben gezeigt, die sich widersprechenden Anforderungen an die Fassung zwischen Schieber und Gehäuse lediglich einen Kompromiß zulassen.

Es ist daher Aufgabe dieser Erfindung, die Vorrichtung zum Mischen mischfähiger Komponenten in der Mischkammer eines Schiebers so weiterzubilden, daß unter Gewährleistung der Dichtheit des Schiebers trotzdem die exakte Führung der Bewegung des Schiebers am Gehäuse unter der geforderten Leichtgängigkeit zwischen den vorliegenden Führungsflächen erzielt wird.

Diese Aufgabe löst die Erfindung mit den Merkmalen des Patentanspruchs 1.

Aus der Erfindung ergibt sich der Vorteil, daß für den Schieber in keiner seiner möglichen Positionen zwischen Mischposition und Sperrposition ein Kontakt zwischen den Komponenten und dem Führungsspalt des Schiebers im Gehäuse notwendig ist. Damit wird aber nach dieser Erfindung die Führungskraft unabhängig von der Dichtkraft.

Dieser Vorteil wird dadurch erreicht, daß alle für die Vermischung der Komponenten notwendigen Kanäle ausschließlich nur noch innerhalb des Schiebers verlaufen. Sogar in der Mischstellung wird daher ein Kontakt zwischen den Komponenten und dem Gehäuse ausgeschlossen. Dies erfolgt dadurch, daß in der Mischstellung jede Komponentenzuleitung mit der zugehörigen Einlaßvertiefung praktisch und im wesentlichen deckungsgleich fluchtet.

Ein Ablagern der Komponenten auf den Führungswänden des Schiebers im Gehäuse wird somit zuverlässig verhindert. Können sich aber die Komponenten nicht mehr an den Führungswänden des Gehäuses absetzen, besteht auch die Gefahr des Vercrackens im Führungsschlitz nicht mehr.

Dabei macht sich die Erfindung zunutze, daß in dem Mischkanal eine hohe Geschwindigkeit der beiderseitigen Komponenten erzielt wird. Durch die hiermit erzeugt turbulente Strömung erfolgt eine gute Durchmischung der Komponenten mit hoher Austragsgeschwindigkeit. Die hohe Austragsgeschwindigkeit sorgt wiederum für die Vermeidung von Ablagerungen und Totwasserzonen in der Strömung. Auf diese Weise wird der gesamte Bereich zwischen Einlaßvertiefung und Mischkanal permanent durch die zugeführten Komponenten gespült und somit freigehalten.

An den Mischkanal kann sich eine nachgeordnete Erweiterung anschließen, in der sich die dann bereits vermischten Komponenten zunächst strömungsmäßig beruhigen können, bevor diese dann aus einer Düse ins Freie geführt werden.

In jedem Fall läßt sich die Erweiterung auch technisch relativ einfach herstellen, da diese nicht das gesamte Schiebermaterial durchsetzen muß. Es genügt nämlich prinzipiell, die Erweiterung als eine Tasche im Schieber auszubilden, deren Boden vom Schiebermaterial gebildet wird. Dabei kann die Tasche, sofern sinnvoll, von ihrer Öffnungsseite her, ohne weiteres von einer Wand des Führungsschlitzes des Schiebers im Gehäuse begrenzt werden. Da in der Erweiterung die Vermischung der Komponenten bereits abgeschlossen ist, und die Erweiterung lediglich noch der Beruhigung der Strömung hoher Strömungsgeschwindigkeit dient, weist in der Erweiterung das Komponentengemisch bereits hohe Homogenität auf, so daß die lokale Gefahr des Vercrackens nicht mehr gegeben ist.

Sollte es notwendig sein, kann darüber hinaus die Erweiterung auch mit einem geeigneten Stopfen verschlossen werden. Zweckmäßigerweise handelt es sich bei der Erweiterung um eine einseitig in den Schieber eingebrachte Materialvertiefung, so daß bei entsprechender Anordnung dieser Materialvertiefung sogar eine, - ansich nicht erforderliche -, Reinigung der Erweiterung stattfinden kann. Insbesondere für Flachschieber hat sich diese Erfindung bewährt. Bei Schiebern mit kreisrundem Querschnitt kann die Erweiterung auch von einer Stirnfläche her kommend in den Rundschieber eingebracht worden sein. Dies kann für beide Schieberausführungn z. B. mit hinterschneidenden Erodiervorrichtungen erfolgen.

Bei der Flachschieberversion kann die Erweiterung, stromabwärts in Richtung zur Düse gesehen, zunächst in eine hinterschnittene Tasche münden. Diese hinterschnittene Tasche sorgt bei herausfahrendem Schieber auch dann noch für Druckerhalt, wenn der vordere Bereich des Schiebers mit der dort angeordneten Austrittsdüse und mit bereits ausgetretenem vorderen Bereich der Erweiterung bereits außerhalb des Gehäuses liegt. Von daher bietet diese Ausführung auch Vorteile bei Schiebern mit kreisrunden Querschnitten.

Um derartigen Schieber möglichst flach zu gestalten, was hinsichtlich der bewegten Massen Vorteile bietet, empfiehlt es sich, die Einlaßvertiefungen so am Schieber anzuordnen, daß diese sich nicht unmittelbar gegenüberliegen. Auf diese Weise kann sogar die verbleibende Restwandstärke des Schiebers entsprechend groß verbleiben, um die bei derartigen Mischvorrichtungen hohen Drücke von bis zu 200 bar abzufangen.

Zusätzlich empfiehlt es sich, die mit den strömenden Komponenten in Berührung kommenden Bereiche des Schiebers strömungsgünstig auszurunden, insbesondere den Boden der Einlaßvertiefungen konkav auszugestalten, um auch dort die Entstehung von Totwasserzonen zu vermeiden.

Im folgenden wird die Erfindung anhand von Ausführungsbeispielen näher erläutert.
Es zeigen:
- Figur 1: einen Längsschnitt durch eine Mischvorrichtung für zwei Komponenten,
- Figur 2: Detailansicht eines Schiebers nach Figur 1,
- Figur 3: vergrößerte Ansicht des vorderen Bereichs des Schiebers nach Figur 2,
- Figur 4: einen Längsschnitt durch den Schieber nach Figur 2 entlang der Linie IV-IV,
- Figur 5: eine Querschnitt durch den Schieber gemäß Figur 1 entlang der Linie V-V,
- Figur 6: eine Mischvorrichtung mit Rundschieber.
Sofern im folgenden nichts anderes gesagt ist, gilt die folgende Beschreibung stets für alle Figuren.

Die Figuren zeigen eine Mischvorrichtung 1 zum Mischen zweier mischfähiger Komponenten. Derartige Komponenten können beispielsweise die Ausgangsstoffe für Polyurethan sein. Bekannterweise handelt es sich um Polyol und Isocyanat.

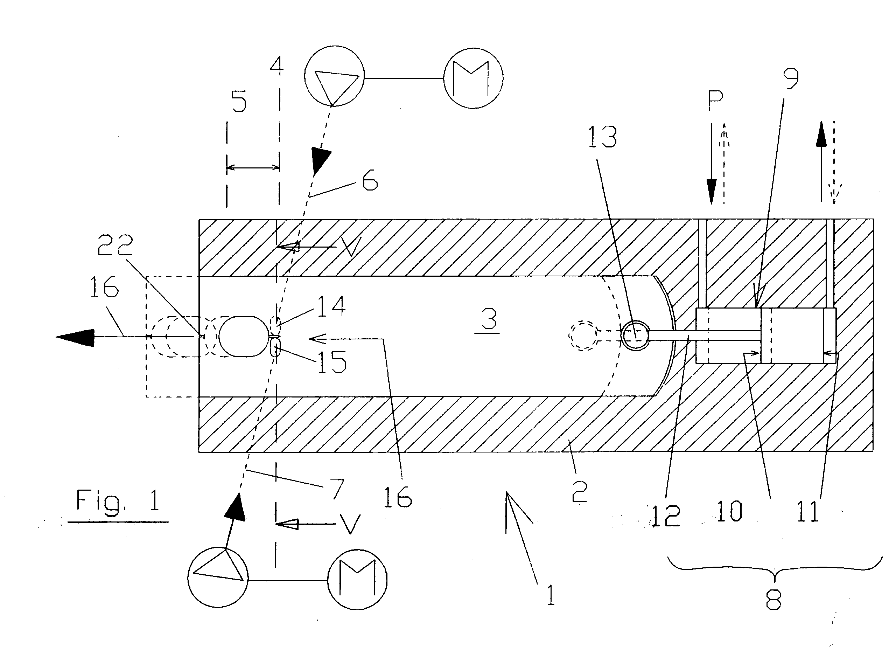

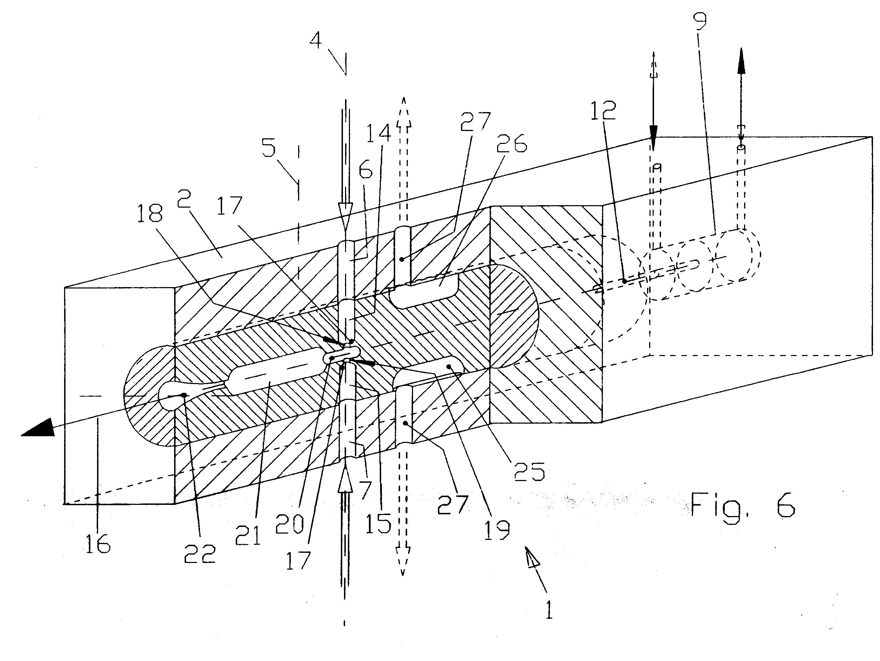

Eine derartige Vorrichtung ist in einem Gehäuse 2 untergebracht. Dieses Gehäuse 2 weist einen in einem Gehäuseschlitz (s. Figur 1) bzw. in einer Gehäusebohrung (s. Figur 6) befindlichen Schieber 3 auf. Der Schieber 3 ist im Ausführungsbeispiel nach Figur 1 als Flachschieber ausgebildet. Im Ausführungsbeispiel nach Figur 6 weist der Schieber kreisrunden Querschnitt auf und ist dichtend in eine entsprechende Bohrung des Gehäuses 2 eingepaßt.In beiden Fällen ist der Schieber 3 relativ zum Gehäuse 2 beweglich angetrieben. Hierzu ist der Flachschieber an seinem im Gehäuse befindlichen Ende mit einem Antriebsende 13 ausgestattet. Das Antriebsende 13 steht mit dem Antrieb 8 des Schiebers in Verbindung. Mittels des Antriebs 8 wird der Schieber zwischen einer Mischposition 4 und einer Sperrposition 5 bewegt. In der Mischposition 4 fluchten die im Schieber 3 befindlichen Einlaßvertiefungen 14, 15 mit den entsprechenden Komponentenzuleitungen 6, 7. Beim Herausfahren des Schiebers 3 aus der gezeigten Position in der mit Pfeil gezeigten Richtung 16 überfahren die Einlaßvertiefungen 14, 15 die Öffnungen der Komponentenzuleitungen 6, 7. Dabei werden die Öffnungen der Komponentenzuleitungen 6, 7 gegenüber dem Flachschieber gesperrt. Jede dieser möglichen Stellungen wird im folgenden als Sperrposition bezeichnet, da die Mischzone 16 dann gegenüber den Komponentenzuleitungen 6, 7 verschlossen ist.

Der Antrieb 8 der Mischvorrichtung besteht aus einer innerhalb des Gehäuses geführten Kolben-Zylindereinheit 9. Es handelt sich um einen beidseitig beaufschlagbaren Kolben, der über eine Kolbenstange 12 mit dem Antriebsende 13 des Schiebers 3 in Verbindung steht. Der Kolben besitzt eine Einfahrkolbenfläche 10 sowie eine Ausfahrkolbenfläche 11. Jeder der gebildeten Kolbenräume wird über eine entsprechende Leitung mit Druck P versorgt, so daß der Schieber 3 dann in der entsprechenden Richtung bewegt wird.

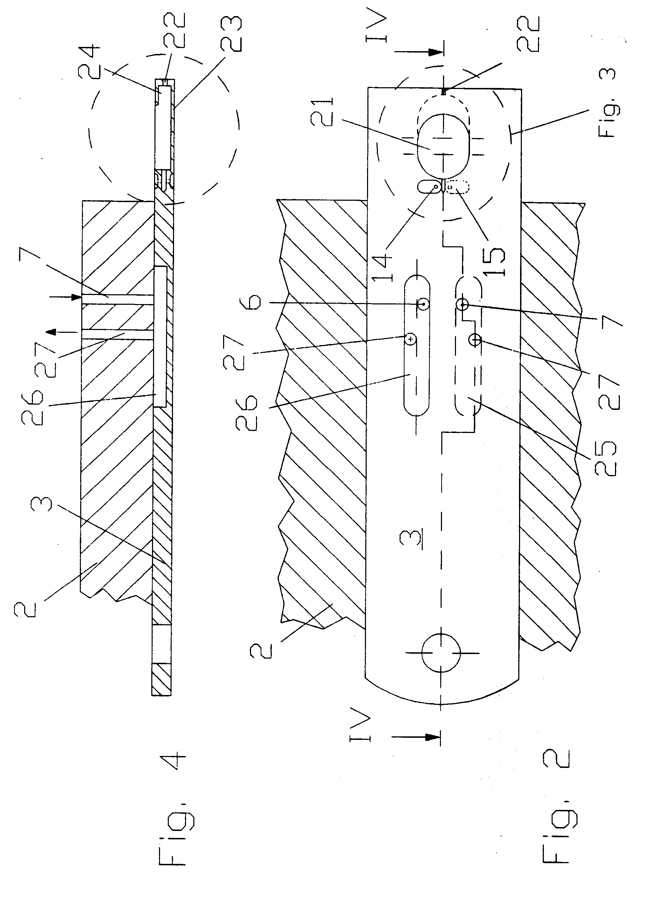

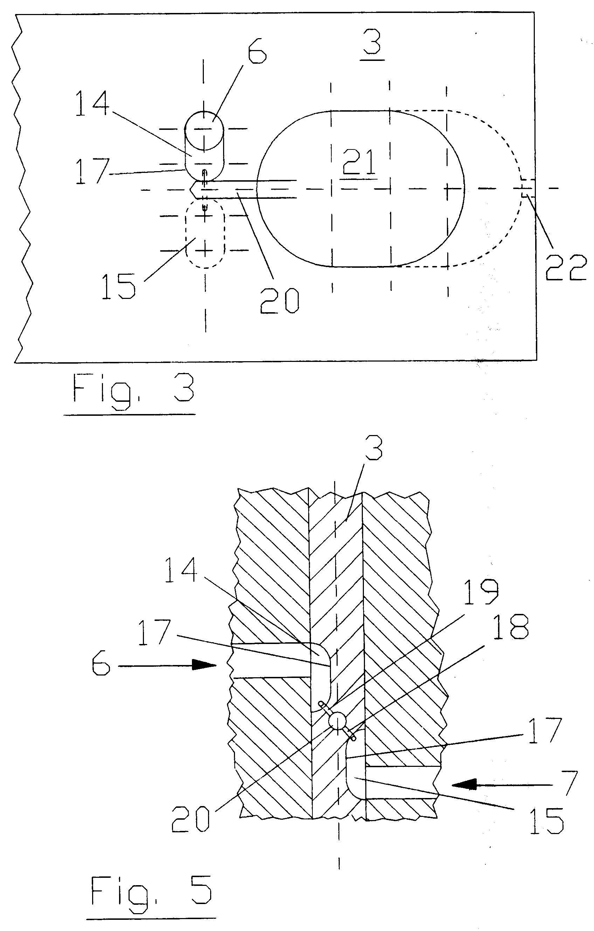

Wesentlich ist nun der Aufbau des Schiebers 3. Der Aufbau läßt sich am besten anhand der Figuren 2 bis 6 erläutern.

Hierzu zeigen insbesondere Figuren 2 und 6, daß für jede der Komponenten eine im Schieber befindliche Einlaßvertiefung 14 bzw. 15 vorgesehen ist. Wie man anhand von Figur 1 bzw. 6 erkennt, fluchtet in der Mischposition 4 jede der Einlaßvertiefungen 14, 15 im wesentlichen deckungsgleich mit der zugehörigen Komponentenzuleitung 6, 7. Hierdurch wird die Bildung von strömungshemmenden Querschnittsverengungen ebenso vermieden wie die Ausbildung von Totwasserzonen durch plötzliche Querschnittserweiterungen.

Folglich entsteht am Ende der Komponentenzuleitungen ein Hohlraum im Schieber, der Mündung der zugeordneten Komponetenzuleitung genau deckungsgleich gegenüberstehend und begrenzt durch einen Boden 17 im Schieber. Die Tiefe jedes Hohlraums beträgt vorzugsweise weniger als die Hälfte der Dicke/des Durchmessers des Schiebers. Dies bietet den Vorteil der Vermeidung von Umlenkkanälen.

Vom Boden jeder Einlaßvertiefung 14, 15 geht dann ein Querkanal 18, 19 aus, der in den kreisrohrförmigen Mischkanal mündet. Dieser Querkanal wird jeweils ausschließlich vom Material des Schiebers allseitig begrenzt.

Die Querkanäle sind ebenso wie der Mischkanal von kreisrohrförmigem Querschnitt. Auf diese Weise wird eine Düse gebildet, in der eine hohe Strömungsgeschwindigkeit erzielt wird. Die Querkanäle sind mit ihren Mündungen in den Mischkanal 20 im wesentlichen aufeinander zu gerichtet, so daß aufgrund der hohen Strömungsgeschwindigkeit eine sehr gute Durchmischung der aufprallenden Komponenten möglich ist. Der Düsendurchmesser kann vorteilhaft an die jeweiligen Strömungsverhältnisse, unterschiedlichen Viskositäten, unterschiedlichen Massendurchsätze angepaßt werden, ohne dabei den grundsätzlichen Vorteil eines hydraulischen Querschnitts zu verlassen.

Es entsteht folglich zwischen jeder Einlaßvertiefung 14, 15 und dem gemeinsamen Mischkanal 20 eine ausschließlich innerhalb des Schiebers 3 verlaufende Kanalanordung, so daß die eingespritzte Komponente außerhalb der Mischposition 4 des Schiebers 3 nicht mehr mit den Wandungen des Gehäuses 2 der Mischvorrichtung 1 in Berührung kommt.

Der Mischkanal 20 verläuft hierzu ebenfalls ausschließlich innerhalb des Schiebers. Wie man anhand von Figuren 2 bis 4 erkennt, setzt sich dann der Mischkanal 20 in eine Erweiterung 21 fort. In diesem Bereich ist jedoch davon auszugehen, daß die Vermischung der beiderseitigen Komponenten bereits abgeschlossen ist. Die Erweiterung dient deshalb lediglich bzw. vorrangig der strömungsberuhigung der miteinander vermischten Komponenten, bevor diese dann aus einer der Erweiterung 21 nachgeordneten Düse 22 ins Freie austreten.

Grundsätzlich soll jedoch für die Erfindung davon ausgegangen werden, daß eine Erweiterung 21 ebenso wie eine Düse 22 nicht unbedingt notwendig ist. Die Vermischung der beiden Komponenten erfolgt jedenfalls im Bereich des Mischkanals, wo die Komponenten mit entsprechend hohen Geschwindigkeiten aufeinander treffen.

Da insbesondere die Geschwindigkeit im Mischkanal aufgrund des Kanalquerschnitts kleiner als die Geschwindigkeiten in den Querkanälen sind, ist davon auszugehen, daß beim Aufeinandertreffen eine Vermischung stattfindet. Ein gewisser Rückstau der Komponenten in der Vermischungsphase wird ermöglicht, die Verweildauer in der Mischungsphase erhöht. Um diese Geschwindigkeitsverhältnisse zu realisieren, soll der freie Strömungsquerschnitt des Mischkanals 20 größer als die Summe der beiden Querschnitte der Querkanäle 18, 19 sein.

Ergänzend hierzu soll noch gesagt sein, daß auch eine Kombination aus Mischkanal gefolgt von Erweiterung gefolgt von einer Düse möglich ist.

Bei nicht vorhandener Düse eignet sich jedoch diese Vorrichtung insbesondere zum Ausgießen der Komponenten, während eine vorhandene Düse eher zum Sprühen der miteinander vermischten Komponenten geeignet ist.

Weiterhin zeigen Figuren 2 und 6, daß im Schieber 3 zueinander parallele Rezirkulationskanäle 25, 26 vorgesehen sind. Die Rezirkulationskanäle kämmen in vorbestimmter Schieberstellung mit den Komponentenzuleitungen 6, 7 am Gehäuse, so daß ein Stillstand der Komponenten in den Komponentenzuleitungen vermieden wird, wenn der Schieber ausgefahren ist. Hierzu tritt die jeweilige Komponente aus einer Komponentenzuleitung 6 bzw. 7 in den Rezirkulationskanal 25 bzw. 26 ein, durchströmt ihn und verläßt diesen am anderen Ende über eine entsprechende Rückführungsbohrung 27.

Das Kämmen der Komponentenzuleitungen 6, 7 und der Rückführungsbohrung 27 mit dem jeweiligen Rezirkulationskanal 25, 26 ist ebenfalls gezeigt.

Dabei ist der Abstand zwischen Komponentenzuleitung und Rezirkulationskanal geringer als die Längsabmessung des Rezirkulationskanals, so daß eine gewisse Beweglichkeit des Schiebers gewährleistet ist, während gleichzeitig die Rezirkulation sichergestellt wurde.

Wie man anhand von Figur 4 erkennt, handelt es sich im Fall eines Flachschiebers bei der Erweiterung 21 um eine einseitig in den Schieber 3 eingebrachte Tasche, die über eine verbleibende Restwand 23 zumindest einseitig des Schiebers von den Wandungen des Gehäuses 2 getrennt ist. Auf diese Weise läßt sich einerseits die gesamte gezeigte Kanalanordnung in der Sperrposition 5 leicht von außen zugänglich reinigen, während gleichzeitig durch die Erweiterung der Mischkammer 21 ein Druckabbau der vermischten Komponenten erfolgt. Der durch die Erweiterung 21 hervorgerufene Druckabbau führt allerdings zu einer guten Dichtwirkung auch bei einem leichtgängig innerhalb des Gehäuses 2 geführten Schieber 3, da die zur Führung des Schiebers erforderlichen Führungskräfte nicht zusätzlich auch noch von hohen Dichtungskräften beeinflußt werden.

Wesentlich ist folglich bei diesem Ausführungsbeispiel auch der Druckabbau in der Erweiterung 21, der zu einer Herabsetzung der Dichtungskräfte der miteinander bereits vermischten Komponenten gegenüber dem den Schieber führenden Gehäuseschlitz sorgt.

Zu diesem Zweck ist die Erweiterung 21 von einer einseitig in den Schieber 3 eingebrachten Materialvertiefung gebildet. Der Druckabfall im Bereich der Erweiterung 21 läßt darüber hinaus eine sehr geringe Restwandstärke 23 zu, da eine druckbedingte Verformung der verbleibenden Wandstärke nicht mehr zu befürchten ist.

Darüber hinaus bietet der enge Querschnitt der Austrittsdüse 22 die Gewähr auch dort für hohe Geschwindigkeiten, so daß ein Zusetzen der Austrittsdüse 22 zuverlässig vermieden wird. Zweckmäßigerweise ist die Länge der Düse 22 in etwa so groß wie deren Querschnitt, vorschlagsweise ca. 0,4 bis 1mm.

Um die in der Erweiterung sich beruhigende Strömung vor Austritt ins Freie zusammenzufassen, bildet die Erweiterung in Richtung zur Düse 22 eine Hinterschneidung 24, so daß auch dort kein Konkakt mehr zwischen den vermischten Komponenten und der Führungswand des Gehäuses 2 stattfinden kann.

Darüber hinaus zeigt Figur 5 den Querschnittsaufbau des Schiebers 3. Es ist ein sogenannter Flachschieber. Dies bedingt aber, daß die Einlaßvertiefungen 14, 15 unter Vermeidung unmittelbar gegenüberliegender Anordnung in den Flachschieber eingebracht werden sollten, um trotz des relativ flachen Aufbaus noch genügende Restmaterialstärken zu behalten.

Zusätzlich zeigt Figur 5, daß die Einlaßvertiefungen zumindest bereichsweise konkaven Boden aufweisen, und daß die Querkanäle 18, 19 vom Bereich konkaven Bodens ausgehen.

Dies bietet den Vorteil eines Freispüleffekts in den Einlaßvertiefungen 14, 15, da sich auch dort keine Totwasserzonen ausbilden können.

Bezüglich des durch kreisrunde Bohrung gebildeten Mischkanals 20 liegen sich hier die Querkanäle 18, 19 diametral gegenüber. Die Ausbildung des Mischkanals 20 mit kreisrundem Querschnitt bietet ebenfalls die Gewähr der Vermeidung von Totwasserzonen. Dies beruht auf der Erkenntnis, daß sich bei rechteckigen Querschnitten stets in den Ecken nicht an der Strömung beteiligte Bereiche ausbilden. Die Ausbildung der Mischkammer mit kreisrundem Querschnitt hingegen bietet den Vorteil, daß lediglich der hydraulisch wirksame Querschnitt bereitgestellt werden muß, und daß hierdurch eine kompakte Bauweise der Mischvorrichtung erzielbar ist.

Das oben gesagte gilt für den Schieber mit kreisrundem Querschnitt gemäß Figur 6 sinngemäß. Derartiger Schieber läßt sich jedoch besonders einfach fertigen, wobei die Dichtflächenpaarung zwischen dem Schiebermantel und der Bohrungswand durch einfache Drehbearbeitung aufeinander eingeschliffen/eingeläppt werden kann.

Bildet man die Abzweigstellen der Querkanäle zusätzlich so aus, daß sich diese tangential zum Mischkanal gegenüberliegen, bietet das den Vorteil einer drallgeprägten Einströmung der Komponenten in den Mischkanal mit guter Durchmischung.

### BEZUGSZEICHENAUFSTELLUNG

- 1: Mischvorrichtung
- 2: Gehäuse
- 3: Schieber
- 4: Mischposition
- 5: Sperrposition
- 6: Komponentenzuleitung A
- 7: Komponentenzuleitung B
- 8: Antrieb
- 9: Kolben-Zylinder-Einheit
- 10: Einfahrkolbenraum
- 11: Ausfahrkolbenraum
- 12: Kolbenstange
- 13: Antriebsende
- 14: Einlaßvertiefung, Komponente A
- 15: Einlaßvertiefung, Komponente B
- 16: Mischzone
- 17: Boden
- 18: Querkanal
- 19: Querkanal
- 20: Mischkanal
- 21: Erweiterung
- 22: Düse
- 23: Wand, Restwandstärke
- 24: Hinterschneidung
- 25: Rezirkulationskanäle
- 26: "
- 27: Rückführungsbohrung

## Patentansprüche

1. Vorrichtung (1) zum Mischen mischfähiger Komponenten mit einem Schieber (3), der in seinem Inneren einen Mischkanal (20) aufweist, wobei der Schieber (3) in einem Gehäuse (2) zwischen einer Mischposition (4), in der der Mischkanal (20) mit Komponentenzuleitungen (6, 7) verbunden ist, und einer Sperrposition (5), in der der Mischkanal (20) gegenüber den Komponentenzuleitungen (6,7) verschlossen ist, hin- und her verschiebbar ist, und der innerhalb des Schiebers (3) verlaufende Mischkanal (20) kopfseitig aus dem Schieber austritt und ins Freie mündet, wobei
für jede der Komponenten im Schieber (3) eine Einlaßvertiefung (14, 15) vorgesehen ist, die in der Mischposition (4) mit ihrer zugehörigen Komponentenzuleitung (6, 7) im wesentlichen deckungsgleich fluchtet, und
vom Boden (17) jeder Einlaßvertiefung (14, 15) ein vom Material des Schiebers allseitig umschlossener Querkanal (18, 19) ausgeht, der als Düse in den Mischkanal (20) mündet.

2. Vorrichtung nach Anspruch 1,
dadurch gekennzeichnet, daß
der Mischkanal (20) mittels einer nachgeordneten Erweiterung (21) ins Freie mündet.

3. Vorrichtung nach den Ansprüchen 1 oder 2,
dadurch gekennzeichnet, daß
der Mischkanal (20) über eine Düse (22) ins Freie mündet.

4. Vorrichtung nach Anspruch 2 oder 3,
dadurch gekennzeichnet, daß
die Erweiterung (21) von einer einseitig an dem Schieber (3) angebrachten Materialvertiefung gebildet wird.

5. Vorrichtung nach Anspruch 4,
dadurch gekennzeichnet, daß
die Materialvertiefung, - von der Ausnehmungsseite gesehen -, in Richtung zur Düse (22) eine Hinterschneidung (24) im Material des Schiebers (3) bildet.

6. Vorrichtung nach einem der Ansprüche 1 - 5,
dadurch gekennzeichnet, daß
der Schieber (3) ein Flachschieber ist, und daß
die Einlaßvertiefungen (14, 15) in die einander gegenüberliegenden Flachseiten des Flachschiebers gegeneinander versetzt eingebracht sind.

7. Vorrichtung nach einem der Ansprüche 1 - 5,
dadurch gekennzeichnet, daß
der Schieber (3) einen kreiszylindrischen Querschnitt aufweist und in eine entsprechende Bohrung des Gehäuses (2) dichtend, jedoch beweglich, eingepaßt ist.

8. Vorrichtung nach den Ansprüchen 1 - 7,
dadurch gekennzeichnet, daß
die Einlaßvertiefungen (14, 15) zumindest bereichsweise konkaven Boden (17) aufweisen, und daß
die Querkanäle (18, 19) von jeweiligen Bereichen konkaven Bodens ausgehen.

9. Vorrichtung nach einem der Ansprüche 6 bis 8,
dadurch gekennzeichnet, daß
sich die Abzweigstellen der Querkanäle (18, 19) diametral zum Mischkanal (20) gegenüberliegen.

10. Vorrichtung nach einem der Ansprüche 6 - 8,
dadurch gekennzeichnet, daß
sich die Abzweigstellen der Querkanäle (18, 19) tangential zum Mischkanal (20) gegenüberliegen.

11. Vorrichtung nach einem der Ansprüche 1 bis 10,
dadurch gekennzeichnet, daß
die Querkanäle (18, 19) kreisförmigen Querschnitt haben.

12. Vorrichtung nach den Ansprüchen 1 - 10,
dadurch gekennzeichnet, daß
der Mischkanal (20) kreisförmigen Querschnitt hat.

13. Vorrichtung nach Anspruch 12,
dadurch gekennzeichnet, daß
die Düse (22) kreisförmigen Querschnitt hat.

14. Vorrichtung nach den Ansprüchen 12 und 13,
dadurch gekennzeichnet, daß
Mischkanal (20) und Düse (22) als miteinander auf einer Achse liegende Bohrungen ausgestaltet sind.

## Claims

1. Device (1) for the mixing of miscible components, comprising a sliding unit (3) which has a mixing channel (20) in its interior, wherein the sliding unit (3) is displaceable back and forth in a housing (2) between a mixing position (4), in which the mixing channel (20) is connected to component supply passages (6, 7), and a blocking position (5), in which the mixing channel (20) is closed off from the component supply passages (6, 7), and the mixing channel (20) extending within the sliding unit (3) exits from the sliding unit at the head end and issues into the ambient atmosphere, wherein for each of the components there is provided in the sliding unit (3) an inlet recess (14, 15) which, in the mixing position (4), is substantially in surface-to-surface alignment with its associated component supply passage (6, 7), and from the bottom (17) of each inlet recess (14, 15) there extends a transverse passage (18, 19) which is closed on all sides by the material of the sliding unit and which issues as a nozzle into the mixing channel (20).

2. Device according to claim 1,
characterised in that
the mixing channel (20) issues into the ambient atmosphere via an enlarged channel (21) which follows the mixing channel.

3. Device according to claim 1 or 2,
characterised in that
the mixing channel (20) issues into the ambient atmosphere through a nozzle (22).

4. Device according to claim 2 or 3,
characterised in that
the enlarged channel (21) is formed by a recess in the material made to one side in the sliding unit (3).

5. Device according to claim 4,
characterised in that
the material recess - viewed from the discharge side - forms an undercut (24) in the material of the sliding unit (3) in the direction towards the nozzle (22).

6. Device according to one of claims 1 to 5,
characterised in that
the sliding unit (3) is a flat sliding unit, and the inlet recesses (14, 15) are arranged offset relative to one another in the flat faces of the flat sliding unit which lie opposed to one another.

7. Device according to one of claims 1 to 5,
characterised in that
the sliding unit (3) has a circular cylindrical cross-section and is sealingly, but displaceably, fitted into a corresponding bore in the housing (2).

8. Device according to claims 1 to 7,
characterised in that
the inlet recesses (14, 15) have concave bottoms (17), at least in regions, and the transverse passages (18, 19) originate from respective concave bottoms regions.

9. Device according to one of claims 6 to 8,
characterised in that
the branching-off positions of the transverse passages (18, 19) are on diametrically opposed sides of the mixing channel (20).

10. Device according to one of claims 6 to 8,
characterised in that
the branching-off positions of the transverse passages (18, 19) lie tangentially to the mixing channel (20).

11. Device according to one of claims 1 to 10,
characterised in that
the transverse passages (18, 19) have a circular cross-section.

12. Device according to claims 1 to 10,
characterised in that
the mixing channel (20) has a circular cross-section.

13. Device according to claim 12,
characterised in that
the nozzle (22) has a circular cross-section.

14. Device according to claims 12 and 13,
characterised in that
mixing channel (20) and nozzle (22) are formed as bores having a common axis.

## Revendications

1. Dispositif (1) pour mélanger des composants miscibles, comportant un robinet-vanne (3) qui renferme un conduit de mélange (20), étant précisé que le robinet-vanne (3) est mobile suivant un mouvement de va-et-vient, dans un carter (2), entre une position de mélange (4) dans laquelle le conduit de mélange (20) est relié à des conduites d'amenée de composants (6, 7), et une position d'obturation (5) dans laquelle le conduit de mélange (20) est fermé par rapport auxdites conduites d'amenée de composants (6, 7), et que le conduit de mélange (20) qui s'étend à l'intérieur du robinet-vanne (3) sort de celui-ci côté tête et débouche à l'air libre, et étant précisé que pour chacun des composants, il est prévu dans le robinet-vanne (3) un creux d'entrée (14, 15) qui, dans la position de mélange (4), se trouve dans l'alignement de sa conduite d'amenée de composants correspondante (6, 7) et coïncide globalement avec celle-ci, et qu'à partir du fond (17) de chaque creux d'entrée (14, 15) s'étend un conduit transversal (18, 19), entouré de tous les côtés par le matériau du robinet-vanne, qui débouche sous la forme d'une buse dans le conduit de mélange (20).

2. Dispositif selon la revendication 1, caractérisé en ce que le conduit de mélange (20) débouche à l'air libre grâce à un élargissement (21) disposé en aval.

3. Dispositif selon les revendications 1 ou 2, caractérisé en ce que le conduit de mélange (20) débouche à l'air libre par l'intermédiaire d'une buse (22).

4. Dispositif selon la revendication 2 ou 3, caractérisé en ce que l'élargissement (21) est défini par un creux de matériau prévu unilatéralement sur le robinet-vanne (3).

5. Dispositif selon la revendication 4, caractérisé en ce que le creux de matériau - vu du côté creusé - définit en direction de la buse (22) une contre-dépouille (24) dans le matériau du robinet-vanne (3).

6. Dispositif selon l'une des revendications 1 à 5, caractérisé en ce que le robinet-vanne (3) est un robinet-vanne plat et en ce que les creux d'entrée (14, 15) sont réalisés dans les côtés plats opposés du robinet-vanne plat en étant décalés l'un par rapport à l'autre.

7. Dispositif selon l'une des revendications 1 à 5, caractérisé en ce que le robinet-vanne (3) présente une section transversale cylindrique circulaire et est emboîté de façon étanche mais mobile dans un perçage correspondant du carter (2).

8. Dispositif selon les revendications 1 à 7, caractérisé en ce que les creux d'entrée (14, 15) présentent au moins par zones un fond concave (17) et en ce que les conduits transversaux (18, 19) partent de zones correspondantes à fond concave.

9. Dispositif selon l'une des revendications 6 à 8, caractérisé en ce que les points de bifurcation des conduits transversaux (18, 19) sont diamétralement opposés par rapport au conduit de mélange (20).

10. Dispositif selon l'une des revendications 6 à 8, caractérisé en ce que les points de bifurcation des conduits transversaux (18, 19) se font face tangentiellement par rapport au conduit de mélange (20).

11. Dispositif selon l'une des revendications 1 à 10, caractérisé en ce que les conduits transversaux (18, 19) ont une section transversale circulaire.

12. Dispositif selon les revendications 1 à 10, caractérisé en ce que le conduit de mélange (20) a une section circulaire.

13. Dispositif selon la revendication 12, caractérisé en ce que la buse (22) a une section transversale circulaire.

14. Dispositif selon les revendications 12 et 13, caractérisé en ce que le conduit de mélange (20) et la buse (22) sont conçus comme des perçages situés sur un même axe.
